Europäisches Patentamt

European Patent Office

Office européen des brevets

(11) Publication number: **0 260 157**
**A1**

# EUROPEAN PATENT APPLICATION

(21) Application number: **87308109.5**

(22) Date of filing: **14.09.87**

(51) Int. Cl.⁴: **G 01 F 23/22**
**G 01 N 21/41**
**// F02K9/96, F02K9/50**

(30) Priority: **12.09.86 GB 8622053**

(43) Date of publication of application:
**16.03.88 Bulletin 88/11**

(84) Designated Contracting States: **DE FR GB**

(71) Applicant: **BRITISH AEROSPACE PUBLIC LIMITED COMPANY**
**11 Strand**
**London WC2N 5JT (GB)**

(72) Inventor: **Hobbs, Lionel W. BRITISH AEROSPACE PUBL. LTD COMP.**
**SPACE AND COMMUNICATIONS DIV. Argyle Way**
**Stevenage Herts SG1 2AS (GB)**

**Balaam, Phillip BRITISH AEROSPACE PUBL. LTD. COMP.**
**SPACE AND COMMUNICATIONS DIV. Argyle Way**
**Stevenage Herts SG1 2AS (GB)**

(74) Representative: **Dowler, Edward Charles et al**
**British Aerospace Public Limited Company Corporate**
**Patents Department Brooklands Road**
**Weybridge Surrey, KT13 OSJ (GB)**

(54) Liquid supply monitoring apparatus.

(57) Known means for sensing the imminent depletion of the contents of a liquid fuel tank, for example, a float connected to an electrical transducer do not work well in the zero gravity of space. Following the realisation that when the fuel in a pressurised spacecraft fuel tank is near depletion bubbles of the pressurising gas start to appear in the outlet duct (2) from the tank, there is proposed herein a simple fuel depletion sensor (1) especially for spacecraft comprising a bubble sensor coupled to the outlet duct. The detector can comprise a light source (3) and an opto-electrical transducer (4).

Fig. 2.

EP 0 260 157 A1

**Description**

## LIQUID SUPPLY MONITORING APPARATUS

This invention relates to a method and apparatus for determining when the reserve of liquid available to be supplied by a pressurised liquid supply system is about to become depleted.

For example, on a spacecraft, a warning signal may be required when the full reserve available to the spacecraft thruster system is about to become used up. By way of example, this signal may be used to indicate that the spacecraft has come to the end of its useful life and that it should therefore be transferred to another orbit where it will not clutter up a useful area of space.

Various kinds of liquid content sensors are known, for example a simple float connected to a transducer, but may not be useful for all situations, in particular a float type of device is not useful in the zero gravity of space. Another way of monitoring liquid, is to maintain a record of the amount used up, for example by measuring and summing the flow passing through the supply pipe from the reserve container. This method too is not useful in every situation.

Thus, an object of the invention is to provide an alternative method and system for determining when the reserve of liquid available to be supplied by a pressurised liquid supply is about to become depleted, which method and system, depending upon the circumstances, may be preferred to the previous proposals.

According to one aspect of the invention, there is provided a method of determining when the reserve of liquid available to be supplied by a pressurised liquid supply system is about to become depleted, in which method a bubble sensor is used to monitor the liquid in a supply duct leading from the reserve container and the presence of bubbles in said duct is detected.

According to a second aspect of this invention, there is provided a fluid monitoring system comprising a pressurised fuel tank connected to propulsion means by means of a duct with bubble detection means positioned around the duct.

According to a third aspect of this invention, there is provided a method of monitoring the state of a pressurised fluid in which the state of the pressurised fluid is indicated by the occurrence of bubbles in the pressurised fluid said bubbles being detected by bubble detection means.

Advantageously said bubble detection comprises light sources and photo-sensitive receivers.

Preferably said light sources and photo-sensitive receivers are arranged in grid formation.

A specific example of the invention will now be described by way of example only, with reference to the figures in which:

Figure 1 is a partial side view of a fuel pipe showing the detector unit in place;

Figure 2 is a longitudinal section view of the detector unit; and

Figure 3 is a transverse section view of the optical unit.

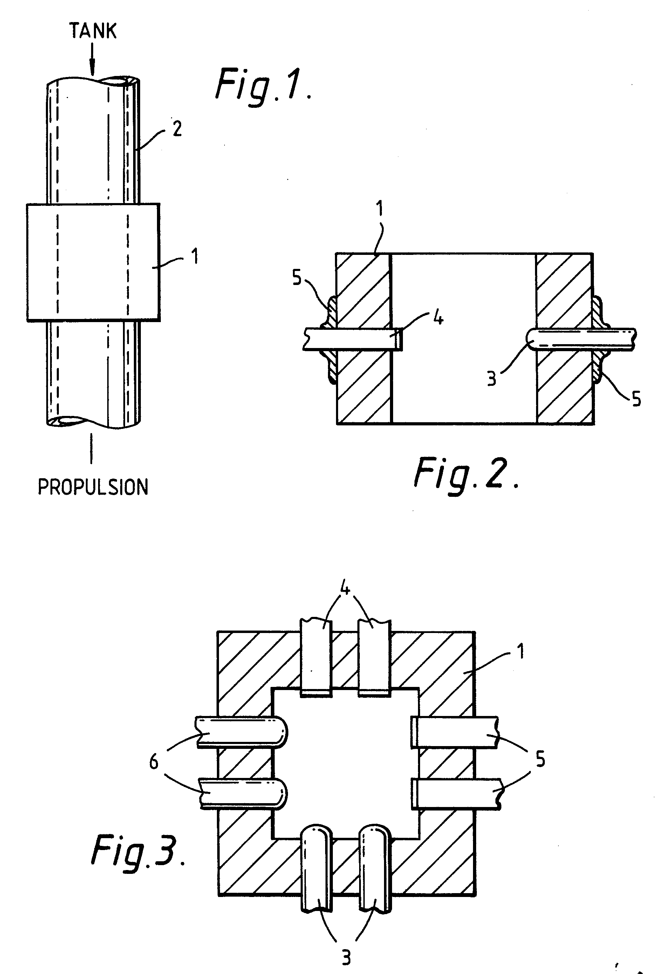

Figure 1 shows a bubble detector mounted co-axially at a convenient point on a fuel pipe 1; the bubble detector is contained in a titanium sleeve 2. In figure 2 light emitting diodes (L.E.D.'s) 3 are arranged inside sleeve 2 to transmit a beam of infra-red radiation transversely across the pipe to be received by photo-transistors 4. The L.E.D.'s 3 and photo-transistors 4 are sealed into sleeve 2 by means of ferrules 5. In figure 3 the bubble detector is shown to comprise 2 pairs of photo-detectors and light sources arranged orthogonally each other in grid arrangement to ensure that the smaller bubbles do not go undetected. A further advantage of the grid arrangement is that if one detector pair should fail the other will continue to function. Although only one bubble detector has been shown in the pipeline a series of bubble detectors could be place along the length of the fuel pipe 2 to improve bubble detection and to provide back up protection in case a whole detector grid should fail. As the fuel flows through the fuel pipe it passes through the titanium sleeve and light beam. As the pressurised gas nears depletion, gas bubbles spontaneously occur in the fuel and attenuate the light beam and are detected as a change in detector output. The arrangement shown is designed to detect the smallest bubbles expected during flight. The light beam is also attenuated by the colour of the fuel for instance monomethyl hydrazine to almost colourless and various mixed oxides of nitrogen present. In the case of dark fuels the output from the detector will be low, but each detector can be tuned to suit the particular fuel and the signal output from the detector can be optimised so it only responds to attenuation by bubbles.

Although the detector pairs are shown as comprising light emitting diodes and photo transistors other light sources and detectors can be used without departing from the scope of the invention.

**Claims**

1. A method of determining when the reserve of liquid available to be supplied by a pressurised liquid supply system is about to become depleted, in which method a bubble sensor is used to monitor the liquid in a supply duct leading from the reserve container and the presence of bubbles in said duct is detected.

2. A fluid monitoring system comprising a pressurised fuel tank connected to propulsion means by means of a duct with bubble detection means positioned around the duct.

3. A method of monitoring the state of a pressurised fluid in which the state of the pressurised fluid is indicated by the occurrence of bubbles in the pressurised fluid said bubbles being detected by bubble detection means.

0260157

TANK

# Fig.1.

2

1

PROPULSION

# Fig.2.

1

5

4

3

5

# Fig.3.

4

1

6

5

3

## DOCUMENTS CONSIDERED TO BE RELEVANT

EP 87308109.5

| Category | Citation of document with indication, where appropriate, of relevant passages | Relevant to claim | CLASSIFICATION OF THE APPLICATION (Int. Cl.4) |
|---|---|---|---|
| P,X | GB - A - 2 185 309 (ROMOTEX) | 1,3 | G 01 F 23/22 |
| Y | * Totality * | 2 | G 01 N 21/41 |
| | -- | | //F 02 K 9/96 |
| Y | US - A - 3 578 755 (D. G. BYNUM) | 2 | F 02 K 9/50 |
| | * Fig. 1-3; column 1, lines 11-62 * | | |
| | -- | | |
| X | WO - A1 - 82/00 591 (BAXTER) | 1,3 | |
| Y | * page 1, line 8 - page 2, line 33; fig. 2-5 * | 2 | |
| | -- | | |
| Y | US - A - 3 987 671 (MONAHAN) | 2 | |
| A | * Fig. 1,2,6-9,11,12; abstract* | 1,3 | |
| | -- | | **TECHNICAL FIELDS SEARCHED (Int. Cl.4)** |
| P,A | GB - A - 2 181 232 (THE GENERAL) | 1-3 | |
| | * Fig. 1; page 1, line 5 - page 2, line 18 * | | G 01 F |
| | | | G 01 N |
| | ---- | | F 02 K |
| | | | F 02 M |
| | | | B 64 G |
| | | | F 17 C |
| | | | A 61 M |

The present search report has been drawn up for all claims

| Place of search | Date of completion of the search | Examiner |
|---|---|---|
| VIENNA | 22-12-1987 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82